# EUROPEAN PATENT APPLICATION

(11) **EP 0 692 918 A2**
(43) Date of publication of application: **17.01.1996**
(21) Application number: 95304705.7
(22) Date of filing: 05.07.1995
(51) Int. Cl.: H04Q 7/22, H04B 7/00, H01P 5/12

(54) **System and method for cellular digital packet data voice channel selection**

(30) Priority: 15.07.1994 US 276080
(71) Applicant: AT&T Corp., New York, NY 10013-2412 (US)
(72) Inventor: Giannoglou, Peter, Montclair, NJ 07042 (US); Rouillard, Leo Raoul, Cedar Knolls, NJ 07927 (US)
(74) Representative: Buckley, Christopher Simon Thirsk

(57) **Abstract**

A combiner network assembly (202) enables a Cellular Digital Packet Data (CDPD) system to sample (on lead 208) Advanced Mobile Phone System (AMPS) voice channels and inject a CDPD transmit data signal (on lead 206) prior to the power amplification of the channel (210) prior to transmission. The combiner network assembly samples the voice channels after they are combined (by 302) and injects the CDPD data transmit signal (on 206) after the sampling point but before the power amplification of the voice channels. The combiner network assembly combines the inputs from one or more voice radios (on 128,130,132) and a setup radio (on 134) with a combiner (302) to produce a combined voice and setup channel output which is then divided by a power divider (318) and output (on 320) to the CDPD radio for sampling. When a voice channel becomes available, the CDPD radio injects a data transmit signal (on 206) to the combiner network assembly at that available voice channel, which combines (in 328) the data signal with the combined voice and setup signal (on 326) to result in a combined voice, setup, and data signal (on 210). This signal is then amplified by a broad band linear RF amplifier for transmission over an antenna sector corresponding to the voice radios.

## Description

### BACKGROUND OF THE INVENTION

### FIELD OF THE INVENTION

The present invention relates generally to cellular communications, and more particularly, to the injection of data signals in the radio frequency transmission path over an available cellular voice channel.

### RELATED ART

Cellular mobile telephone systems provide direct-dial telephone service to any mobile user by using radio transmission. The service area of a cellular mobile telephone system is divided into regions called cells, each of which has equipment to switch, transmit, and receive calls to and from any mobile unit located in the cell. Each cell transmitter and receiver operates on a voice channel (frequency). A single channel may be used for many simultaneous conversations (voice signals) in cells which are separated enough to avoid excessive interference. Thus, as the number of users increases, so does the number of cells, with each cell covering a smaller geographic area. Because noise immunity is very important, frequency modulation (FM) is used for radio transmission between mobile users and the base station of the cell. The present standard for cellular mobile telephone service in the United States is known as the Advanced Mobile Phone System (AMPS).

Recently, there has been an effort to transmit and receive digital data as well as voice information with mobile cellular telephone users. Towards that end, the Cellular Digital Packet Data (CDPD) transmission standard was developed. The CDPD standard governs the transmission of data between mobile and other land based users. A system which operates according to the CDPD transmission standard is referred to as a CDPD radio.

What is needed is a non-intrusive means for transmitting CDPD data signals on the Advanced Mobile Phone System to avoid the cost of establishing dedicated facilities for data transmission, and in such a manner so as to not interfere with the performance of the presently existing voice network.

### SUMMARY OF THE INVENTION

The present invention is a combiner network assembly (CNA) which is configured to enable a Cellular Digital Packet Data (CDPD) system to sample combined Advanced Mobile Phone System (AMPS) voice channels and inject a CDPD data transmit signal into the radio frequency (RF) transmission path over an available voice channel prior to the final amplification of the combined voice channels by a transmission system power amplifier.

The combiner network assembly of the present invention has one or more input ports, each coupled to one or more voice radios via one or more transmit signal power combiners. The combiner network assembly may also be configured to interface with a setup radio for receiving a setup channel. The RF signals received via these input ports are combined by a combiner to produce a combined voice (and, if included, setup) channel output. A power divider directs the combined voice (and setup) channel signals to a CDPD radio and to a second combiner internal to the combiner network assembly. The combined voice (and setup) channels are provided to the CDPD radio via a CDPD voice sampling RF transmission path.

The CDPD radio processes the combined voice (and setup) channels and determines if a voice channel is presently not being utilized by the voice radios and then provides a CDPD data transmit signal at that available voice channel to the combiner network assembly. The CDPD radio provides the data signal to the combiner network assembly via a CDPD data signal RF transmission path. The combiner network assembly injects the CDPD data transmission signal onto the main RF transmission through path by combining the data signal with the combined AMPS signal containing the voice and setup channel signals output from the power divider. This results in a combined voice, setup, and data signal. This combined voice, setup, and data signal is then transmitted over an antenna sector to which the voice radios are dedicated.

One advantage of the present invention is that it provides the CDPD radio with the ability to instantaneously sample the AMPS voice radio transmission activity, thereby enabling the CDPD radio to instantaneously determine which of the voice channels are not being utilized by the voice radios and transmit a CDPD data signal onto the RF transmission path over that instantaneously inactive AMPS voice channel. This enables the AMPS system to transmit CDPD data signals over available voice channels while assigning the real-time voice signals priority over the CDPD data signals without having to provide a dedicated AMPS channel to the CDPD radio for transmission of CDPD data signals.

Another advantage of the present invention is that it maintains sufficient isolation between the CDPD transmit data signal and the sampled AMPS voice and setup signals. This enables the CDPD radio to accurately process the AMPS voice (and setup) channels to determine which channel is available.

Another advantage of the present invention is that it enables the CDPD transmit data signal which is injected into the AMPS channel to utilize the same antenna and associated RF transmission hardware as the AMPS transmissions, thereby avoiding the cost of an additional transmit antenna dedicated to the CDPD radio.

Another advantage of the present invention is the ability to achieve the above functional objectives in a single-structured device while preserving the current AMPS system architecture, cabling, and signal levels.

Further features and advantages of the present invention, as well as the structure and operation of various embodiments of the present invention, are described in detail below with reference to the accompanying drawings. In the drawings, like reference numbers indicate identical or functionally similar elements. Additionally, the left-most digit of a reference number identifies the drawing in which the reference number first appears.

### BRIEF DESCRIPTION OF THE DRAWINGS

The present invention will be described with reference to the accompanying drawings, wherein:
Figure 1 is a block diagram of a conventional AMPS transmission facility;
Figure 2 is a block diagram of the AMPS transmission facility of the present invention;
Figure 3 is an architectural block diagram of the combiner network assembly of the present invention; and
Figure 4 is a flow chart of the operational steps performed by the combiner network assembly of the present invention.

### DETAILED DESCRIPTION OF THE PREFERRED EMBODIMENTS

### I. Introduction

The Combiner Network Assembly (CNA) of the present invention enables a Cellular Digital Packet Data (CDPD) radio system to sample combined Advanced Mobile Phone System (AMPS) voice channels at a single location along the radio frequency (RF) transmission path. The Combiner Network Assembly also enables the CDPD radio to inject a CDPD data transmit signal into the RF transmission path over an instantaneously available voice channel. The point of injection occurs after the point of sampling, but occurs prior to the amplification of the combined voice channels for transmission by a cell site antenna.

### II. Advance Mobile Phone System (AMPS)

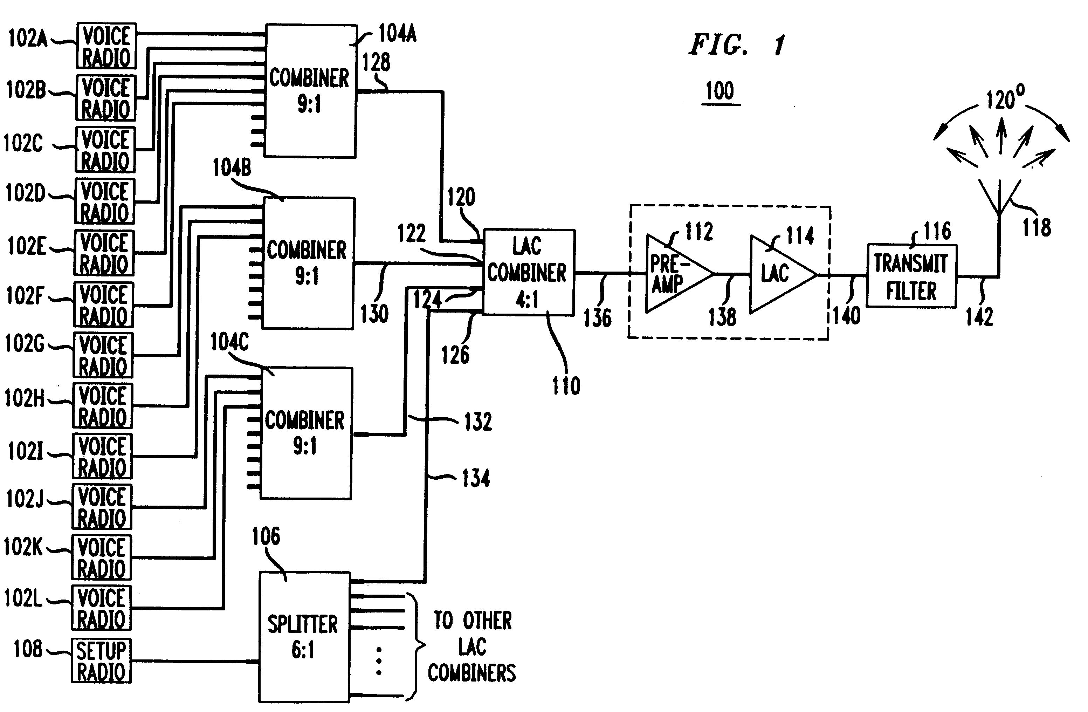

Figure 1 illustrates a conventional implementation of a transmission facility for the Advanced Mobile Phone System (AMPS) cellular mobile telephone system. Referring to Figure 1, the architecture of an AMPS transmit facility 100 is now discussed. As discussed above, an AMPS cellular phone system is a cellular phone system which operates in accordance with the Advanced Mobile Phone System, established for wireless communications systems in the United States and other countries. AMPS is considered to be well known to those skilled in the relevant art.

Transmission facility 100 includes a number of voice radio transmitters that transmit voice signals over an associated antenna sector which is associated with the voice radios. In the AMPS transmission facility 100 shown in Figure 1, the voice channels over which voice radios 102A through 102F transmit their voice signals are combined in a combiner 104A. Similarly, the voice channels over which voice radios 102G-102I transmit their voice signals are combined by a combiner 104B. Likewise, the voice channels over which voice radios 102J-102L transmit their voice signals are combined by a combiner 104C.

Voice radios 102A-102L include both, a transmitter and a receiver, typically in the same device, referred to as a transceiver. However, the present invention operates with the voice channels output by the transmitter portion of voice radios 102A-102L. Thus, in the following description, the term voice radio refers to the transmission function of the voice radios 102A-102L. In addition, voice radios 102A-102L are collectively and generally referred to as voice radios 102.

Combiner 104A outputs the combined voice channels from voice radios 102A through 102F on voice channel RF transmission path 128. Combiner 104B outputs the combined voice channels from voice radios 102G through 102I on voice channel RF transmission path 130. Combiner 104C outputs the combined voice channels from voice radios 102J through 102L on voice channel RF transmission path 132. Combiners 104A through 104C are collectively and generally referred to as combiners 104. These combined groups of voice radio transmitters 102 are further combined in a single RF transmission path and input into a Linear Amplifier Circuit (LAC) 114 in the manner described below.

Each of the combined groups of voice radios 102 are connected to an input port on a linear amplifier circuit combiner (LAC combiner) 110. LAC combiner 110 has four input ports 120, 122, 124, and 126. In the preferred embodiment, one of the four input ports is used to receive setup signals generated by a setup radio. Since one input port is dedicated to the setup radio, LAC combiner 110 can accept voice channels from three combiners 104 in the three remaining input ports. Thus, input port 120 is coupled to combiner 104A, input port 122 is coupled to combiner 104B, and input port 124 is coupled to combiner 104C. As shown in the configuration illustrated in Figure 1 and described above, LAC combiner 110 has four input ports. However, as one skilled in the relevant art would find apparent, LAC combiner 110 may have any number of input ports, any number of which may be dedicated to receiving voice channels from voice radios 102. The LAC combiner input ports which are not presently dedicated to receiving voice channels may be reserved for future growth, or, as shown in Figure 1, coupled to a voice radio 108.

In the preferred embodiment of the present invention, combiners 104A-104C are 9-to-1 combiners, each capable of receiving voice channels from up to a total of nine voice radios operating in the AMPS frequency range, and generating a combined voice channel output. However, as one skilled in the relevant art would find apparent, combiners 104A-104C may be any type or size power combiner sufficient to support a given application, configuration, and selected frequency range.

For example, in one embodiment, voice radios 102 are first coupled to a 4-to-1 combiner which then provides the combined voice radio channels to one of the inputs of combiners 104. In such a configuration, each combiner 104 would have an output representing 36 (4 radios per each of the 9 inputs) voice radios. In this embodiment, LAC 114, which receives the combined voice radio channels from three 9-to-1 combiners 104, would then support a total of 108 voice radios 102. The design considerations for such configurations are discussed below.

A mobile unit or user is called by transmitting its number over a setup channel. When the mobile unit recognizes its number, it quickly seizes the strongest setup channel and transmits an acknowledgement response. The cell site then uses the seized setup channel to transmit the voice channel assignment to the mobile unit. The mobile unit and the cell site radio switch to the voice channel radio frequency and the voice channel is then used. A similar sequence is used when the mobile user originates the call. The setup channel is generated by setup radio 108 and supplied to LAC combiner 110 through a one-to-six power divider 106. Power divider 106 is also referred to as a power splitter or splitter 106. The setup channel transmission is provided to LAC combiner 110 via a setup channel RF transmission path 134. The setup channel is then combined with the voice channels into a single RF transmission path, amplified by LAC 114, and transmitted by cell site antenna 118.

In the transmission facility of the preferred embodiment, the setup radio 108 is coupled to LAC 114 which is associated with a single antenna sector 118. As shown in Figure 1, the output of setup radio 108 may be provided to more than one LAC (through a LAC combiner 110). In the preferred embodiment, these additional LACs are part of the transmission facilities which serve the remaining sectors of the cell. However, as would be apparent to one skilled in the art, other configurations of setup radio 108 are possible. For example, in cellular systems which have a single LAC coupled to the output of each voice radio 102 or a single LAC coupled to the output of each combiner 104, the setup radio may be combined with the voice channels at any point along the RF transmission path before the amplification of the combined channels. This may be, for example, at the input of one or more LACs in the former configuration, or at the input of one of the combiners 104 in the latter configuration.

Returning to the preferred embodiment illustrated in Figure 1, the output of setup radio 108 is input into a power divider 106 which splits the setup channel and provides it to the LACs of the remaining transmission facilities associated with the cell containing antenna sector 118. This arrangement of serving all the sectors in a given cell with a single setup radio is referred to as the simulcast setup feature of transmission facility 100. As one skilled in the relevant art would find apparent, power splitter 106 may contain as many ports as necessary to support a given configuration.

In another preferred embodiment, setup radio 108 is input into one of the combiners 104, such as combiner 104C. In such a configuration the input port 126 of LAC combiner 110 is available for receiving additional voice radio channels. Thus, any number of configuration are possible, depending upon the size of the sector being served, the number of users, the number of voice radios, the power level requirements, the characteristics of LAC 114, et cetera.

After the voice transmission and setup channel signals are combined in LAC combiner 110, they are output on RF transmission path 136 and provided to preamplifier 112. Preamplifier 112 performs well known pre-amplification functions and outputs the amplified AMPS signals on RF transmission path 138 to LAC 114. In Figure 1, preamplifier 112 and LAC 114 are shown as separate units. However, in the preferred embodiment of the present invention, preamplifier 112 and LAC 114 are contained in the same unit, with preamplifier 112 serving as the initial amplification stage of the combined amplifying unit. In addition, the pre-amplification function performed by preamplifier 112 may be performed in multiple stages by multiple preamplifiers.

LAC 114 then amplifies the AMPS (combined voice and setup) signals for eventual transmission over antenna 118. LAC 114 has a broad band capability and linearity which enables it to simultaneously amplify signals on many channels. LAC 114 provides transmission facility 100 flexibility to inject various signals onto a single RF transmission for efficiently amplification. This result cannot be achieved with nonlinear amplifiers. Amplifying more than one channel with a non-linear amplifier which does not have a broad band capability results in the production of intermodulation products or by-products. That is, undesirable signals develop near the primary signals which are being amplified. These undesirable signals pollute the airwaves of the cell and degrade performance of the system. The LAC of the present invention amplifies the voice channel signals with a minimum of these unwanted intermodulation products being developed, thereby minimizes the amount of pollution within and without the spectrum. As a result, each antenna sector has a single associated LAC 114 supporting the voice channels generated by all voice radios 102 for a given antenna 118.

LAC 114 then forwards them via RF transmission path 140 to a transmit filter 116. The combined, amplified, and now filtered signals are then delivered to the cell site antenna sector 118 via an RF transmission path 142. In the configuration illustrated in Figure 1, a single transmit filter 116 is illustrated. However, as one of ordinary skill in the art would find apparent, any number of transmission filters may be utilized with the present invention. For example, transmit filter 116 may be replaced with a series of transmit filters. As shown in Figure 1, LAC 114 and LAC combiner 110 are associated with a particular antenna 118.

In the preferred embodiment of the present invention, antenna 118 serves a portion of the cell site, referred to as an antenna sector and is thus referred to as a sector antenna. The antenna sector served by antenna 118 is 120 degrees. Thus, three transmission facilities 200 would be required to completely service a cell (3 facilities X 120 degrees per facility = 360 degrees). However, as one skilled in the art would find apparent, antenna 118 may be any type of antenna having directional or omnidirectional sectors, operating in sectorized cell sites or omni-directional cell sites.

The RF transmission paths 136, 138, 140, and 142 are the main RF transmission paths through transmission facility 100, over which the AMPS signals travel for eventual broadcast. These RF transmission paths are collectively referred to as the main RF transmission through path.

As discussed above, transmission facility 100 is part of an AMPS system. For example, transmission facility 100 is part of an AT&T Autoplex® System 1000 Series II cell sites, available from AT&T, Whippany, N.J., U.S.A. The operation of transmission facility 100 shown in Figure 1 is well known in the art. Generally, voice radios 102 are assigned operating frequencies and antenna sectors and turn-on and off depending on the connect and disconnect activity of the cellular customer.

### III. Cellular Digital Packet Data (CDPD)

A CDPD radio is a cellular sub-system which transmits data between mobile and other mobile or land based users according to the well known Cellular Digital Packet Data standard. As discussed above, it is desired to integrate such a CDPD radio into the AMPS system in order that it may share the transmission facilities of the AMPS system, thereby eliminating the requirement for dedicated hardware for the CDPD radio.

A CDPD radio performs both a transmit function as well as a receive function. Typically these two functions are performed by a single device, referred to as a transceiver. The present invention operates only with the transmit portion of a CDPD radio. Thus, in the following discussion, the term CDPD radio refers to the transmit function of the CDPD radio.

CDPD data is packetized and transmitted in bursts. A single message may be transmitted in a series of successive bursts separated in time. In addition, these separate bursts of data may be transmitted over different frequencies. The receiving mobile user is provided with the necessary control information regarding the number of data packets and channel assignment. Therefore, CDPD data need not be transmitted in real-time.

In preferred embodiment of the present invention, the CDPD radio also has the capability of performing a sampling technique referred to in the art as "RF sniffing" to detect the presence or absence of AMPS activity on a given channel or set of channels. The CDPD radio can also dynamically set the frequency at which each burst of data packets is transmitted. Because of the packetized nature of the data transmissions, many users can share the same channel and if they are transmitting numerous short packs of data, the CDPD approach is far more cost effective than the currently available methods of transmitting data.

The combiner network assembly of the present invention achieves the desired goal of non-intrusively injecting a CDPD radio data signal onto an existing voice radio RF transmit path. To achieve this goal, the necessary information (AMPS channel activity) must be provided to the CDPD radio for processing. In addition, a means must be provided for combining the CDPD data signal which is generated by the CDPD radio with the existing AMPS channels. By providing the CDPD radio with the voice channels, when the CDPD radio finds a channel not in use by sampling the signals available on RF transmission path 208, it may then transmit the CDPD data signal on that available AMPS channel. The CDPD radio may continue to transmit data messages over momentarily unused voice channels until a complete message is transmitted.

This technique has the advantage of integrating the CDPD radio into the AMPS system without interfering with the real time nature of voice transmissions. The AMPS calls are given a higher priority than the CDPD calls. By forwarding the necessary information to the CDPD radio for processing, the present invention enables the CDPD radio to maintain AMPS signal priority. The CDPD radio maintains the priority by sampling ("sniffing") the AMPS channels and then dynamically changing ("hopping") to an available AMPS channel. Thus, the combiner network assembly provides the mechanism for the CDPD radio to perform its "sniff and hop" function.

To achieve the above desired goal of non-intrusively injecting a CDPD radio data signal onto an existing voice radio RF transmit path, a number of configurations and approaches were considered by the inventors, all of which were found to be impractical or costly.

One approach considered by the inventors was to inject the CDPD data transmit signal into the input of LAC combiner 110 and sniff (sample) in the RF transmission path at a point sometime after LAC 114. This may be accomplished by providing the CDPD data signal to one of the inputs of a combiner 104 or directly into one of the inputs of LAC combiner 110. This approach is very difficult to perform because the sampling circuitry of the CDPD radio needs to be sensitive enough to be able to detect a change in power level between the CDPD transmitter signal and the combination of the CDPD transmitter signal plus an AMPS voice transmit signal. That is, the CDPD radio must sense when a voice radio has initially started transmitting on the channel (at the same frequency) as the CDPD radio. This margin is reduced even further because of component tolerances or variations of power level due to environmental conditions. In addition, if an AMPS voice radio 102 transmits at a power level lower than the CDPD signal, detection would be impossible.

Another approach is to individually sample the voice channel lines 128, 130, and 132 output by combiners 104. After the voice channels are sampled, transmission lines 128, 130, and 132 are combined into a single transmit path and, along with the CDPD data transmit signal, input into LAC combiner 110. This approach does not have the disadvantage of the first approach described above. However, this approach is undesirable due to the cost impact to the customer. It requires a 2-way power divider at each output of combiners 104 to provide the voice channel transmissions generated by the associated voice radios to the CDPD radio. This approach also requires an isolator associated with each combiner 104 to prevent the CDPD data transmit signal from affecting the voice channel transmission sample path. In addition, this approach requires an additional combiner to combine the outputs from the 2-way combiners into one sniff signal for the CDPD radio. This additional hardware increases the acquisition and maintenance costs of the system. Finally, one of the inputs on LAC combiner 110 is needed to inject the CDPD transmit signal. This limits the number of voice radios which may be supported by LAC 114.

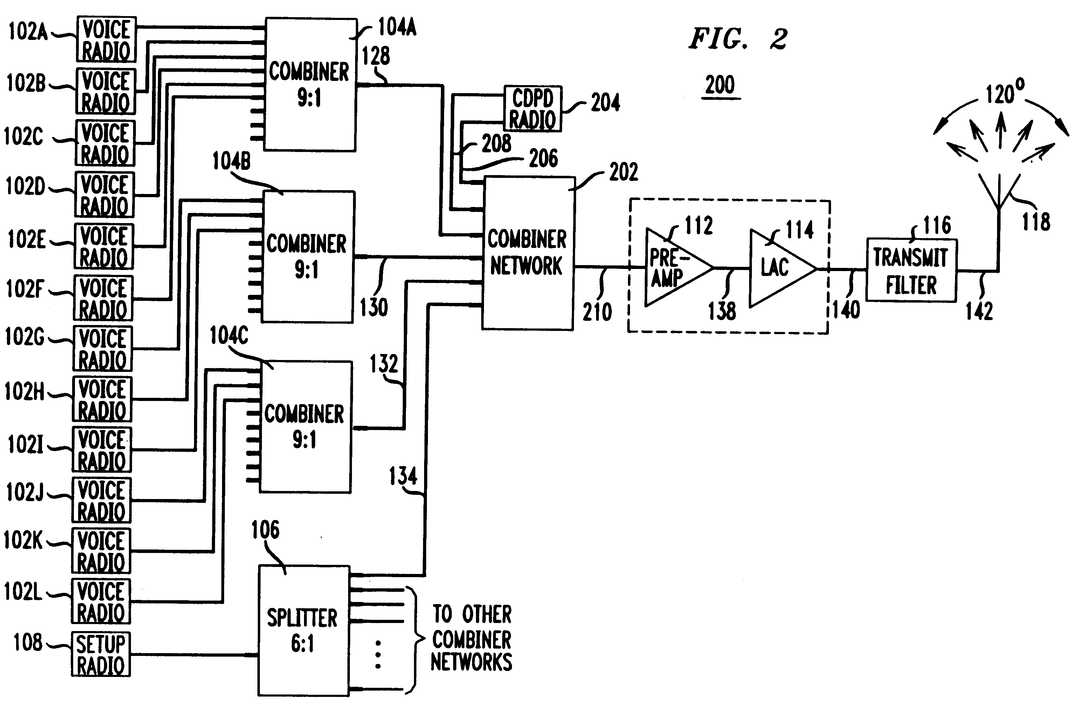

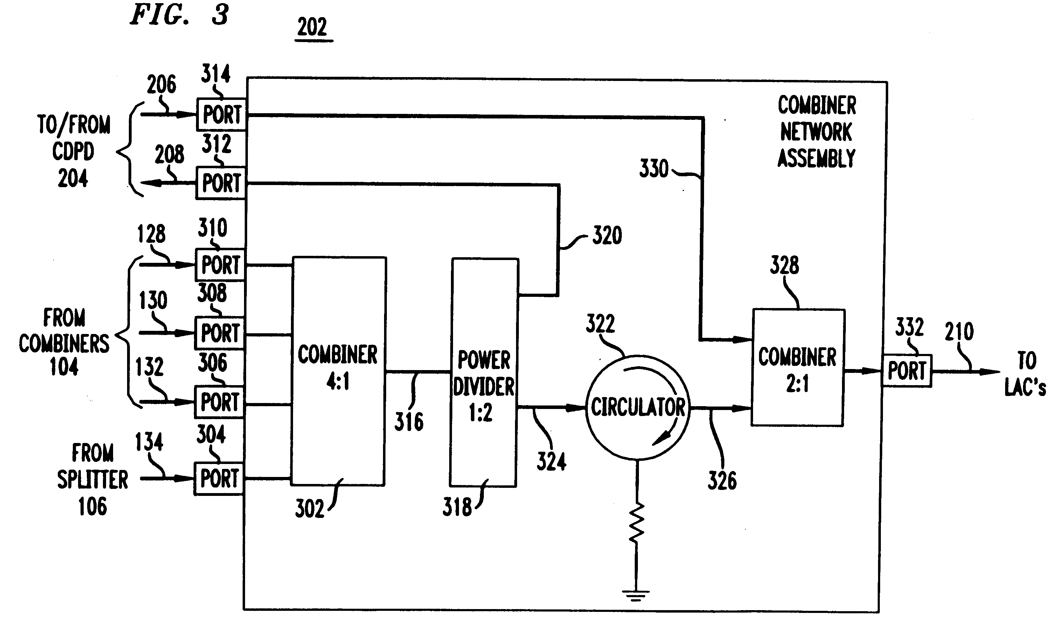

The approach implemented in the preferred embodiment of the present invention is to perform the sniffing function at a single point along the RF transmission path after LAC combiner 110. Then, the CDPD transmit signal is injected into the RF transmission path at a point after the sniff point but before the power amplification is performed at LAC 114. This configuration is described below with reference to Figures 2 and 3.

Figure 2 is a block diagram of an AMPS transmission facility of the present invention which incorporates a CDPD radio for digital data transmission. Referring to Figure 2, the operation of the present invention will now be described. In the preferred embodiment of the present invention, the AMPS system into which the present invention is implemented is an AT&T Autoplex® System 1000 Series II cell site, available from AT&T, Whippany, N.J., U.S.A. However, as one skill in the art will find apparent, the present invention may be implemented in the transmission facility of any cellular phone system. Figure 2 illustrates the resulting transmission facility 200 including a combiner network assembly 202 of the present invention and a CDPD radio 204. The CDPD radio 204 is located at the cell site and integrated with the existing AMPS cell site equipment.

The present invention is a CDPD combiner network assembly implemented in transmission facility 100 to replace and perform the functions of LAC combiner 110, as well as to enable the CDPD radio 204 to operate in the manner discussed above. Combiner network assembly 202 enables the integration of CDPD radio 204 into the transmission facility 100 of the Series II AMPS system to result in transmission facility 200 shown in Figure 2.

As discussed with reference to Figure 1, transmit facility 200 includes a number of voice radios 102 which are combined in groups corresponding to an antenna 118 over which voice radio channels generated by the voice radios 102 are transmitted. Each of the combiners 104 receive a number of voice radio inputs and generate the combined voice channels on RF transmission paths 128, 130, and 132. A setup radio 108 is used to supply a setup channel to LAC combiner 110 through a power divider 106.

Each of the combined groups of voice and setup radios 102, 108 are connected to the combiner network assembly 202 of the present invention (discussed in detail below). In addition, CDPD radio 204 is coupled to combiner network assembly 202 via two RF transmission paths: a CDPD data signal RF transmission path 206 and a CDPD voice sampling RF transmission path 208 (also discussed below).

Combiner network assembly 202 generates an output which includes voice and setup channels as in transmission facility 100 of Figure 1. However, in the transmission facility 200 of the present invention, the output of combiner network assembly 202 also includes a CDPD data transmission signal generated by CDPD radio 204 at an available voice radio frequency. This combined voice, setup, and data signal is provided to preamplifier 112 for pre-amplification. Then, it is provided to LAC 114 via RF transmission path 138 for amplification. Then, it is provided to transmit filter 116 via RF transmission path 140 and finally delivered to antenna 118 via RF transmission path 142.

### IV. Combiner Network Assembly (CNA)

Figure 3 is a block diagram of a preferred embodiment of the combiner network assembly 202 of the present invention. Referring to Figure 3, the structure and operation of combiner network assembly 202 will now be described.

Combiner network assembly 202 has four input ports 304, 306, 308, and 310. Since the combiner network assembly 202 is designed to replace LAC combiner 110 in transmission facility 100, the four inputs are connected to the three combiners 104 and power divider 106. Input 304 is coupled to power divider 106 via setup channel RF transmission path 134, input 306 is coupled to combiner 104C via voice channel RF transmission path 132, input 308 is coupled to combiner 104B via voice channel RF transmission path 130, and input 310 is coupled to combiner 104A via voice channel RF transmission path 128.

As discussed above, there are two radio frequency transmission paths by which the combiner network assembly 202 of the present invention interfaces with CDPD radio 204. The first is CDPD voice sampling RF transmission path 208 by which CDPD radio 204 sniffs (samples) the combined AMPS voice channels. CDPD voice sampling RF transmission path 208 is connected to combiner network assembly 202 at output port 312. The second is CDPD data signal RF transmission path 206 by which CDPD radio 204 injects a data transmit signal at an available AMPS voice frequency onto the RF transmission path. CDPD data signal RF transmission path 206 is connected to combiner network assembly 202 at input port 314.

Combiner network assembly 202 utilizes a four-to-one input combiner 302 to combine the voice and the setup signals. Input combiner 302 performs a similar function as that performed by LAC combiner 110 of Figure 1. The combined AMPS signals output by input combiner 302 is provided on RF transmission path 316 to an unbalanced 2-way power divider 318. Power divider 318 directs the combined AMPS signals to output port 312 via RF transmission path 320. This combined signal is then provided to CDPD radio 204 via CDPD voice sampling RF transmission path 208.

Power divider 318 also directs the combined AMPS signals received on RF transmission path 316 to a circulator 322 via RF transmission path 324. Circulator 322 prevents CDPD radio 204 from falsely sniffing its own signal (discussed below). The combined AMPS signals are output from Circulator 322 on RF transmission path 326 to an unbalanced 2-way power combiner 328.

The design consideration regarding the unbalanced power splitter 318 and combiner 328 are now discussed. As discussed above, it is desired to implement the present invention in an AMPS system to replace LAC combiner 110 without having to modify any other components of the system. Thus, the AMPS signal level coming into combiner network assembly 202 has not changed, that is, is at the same signal level. Likewise, the combiner network assembly 202 must output the AMPS signals at the same power level as the LAC combiner 110 of Figure 1. In other words, the AMPS signals must experience the same insertion loss in the combiner network assembly 202 as LAC combiner 110.

The LAC combiner 110 illustrated in Figure 1 and discussed above has a total insertion loss from input to output of approximately 12 dB. In the combiner network assembly 202, input combiner 302 has an insertion loss of 6 dB. The 1-to-2 power splitter 318 and the 2-to-1 power combiner 328 both have a 3 dB loss. Thus, the total insertion loss of combiner network assembly 202 would be 12 dB. This is the ideal loss which would be experienced by the AMPS signals as they pass through a combiner network assembly having perfect, balanced combiners and splitters. In practice, however, greater losses are experienced due to equipment variations, mismatch, environment conditions, *et cetera*.

To achieve a specific total insertion loss, the power splitter and combiner are configured to give more power to the AMPS signals and less to the sniffing and CDPD data signal, respectively. For example, rather than power splitter 318 distributing a 3 dB loss to each RF transmission paths 320 and 324, the power splitter is configured to distribute the loss unequally, for example, 4 dB and 2 dB. This enables the combiner network assembly 202 to maintain the original AMPS signal level at the output port 332. As one skilled in the art would find apparent, the specific configuration of the power splitter 318 and combiner 328 will depend upon the power level of the signals, the insertion loss desired, and the other losses experienced by the AMPS signals in the combiner network assembly due to other components.

CDPD data RF transmission path 330 and voice and setup RF transmission path 326 enter at two separate ports of 2-to-1 combiner 328. There is a degree of leakage that occurs between these two input ports. For example, the signals which are received on CDPD data RF transmission path 330 may leak back into RF transmission path 326, thereby causing upstream contamination. Without some type of isolation, this upstream contamination travels along RF transmission path 324 and may also affect RF transmission path 320 through power splitter 318. Under such circumstances, when CDPD radio 204 sniffs the combined AMPS signals it also detects any CDPD data signal it has been injected into the combiner network assembly 200. This causes CDPD radio 204 to determine that an AMPS voice radio is transmitting at that frequency and is therefore not available for injection of the CDPD data signal. This continues indefinitely, resulting in the CDPD data signal not being transmitted.

Circulator 322 prevents this phenomenon from occurring. The isolation which exists between the two input ports of combiner 328, may be insufficient for the signal power levels, thereby causing the above leakage. In the preferred embodiment of the present invention, circulator 322 has three ports. The first port is coupled to RF transmission path 324; the second port is coupled to RF transmission path 326, and the third port, referred to as a termination port, is coupled to a dissipator. In the preferred embodiment, the dissipator is a 50 Ohm resistor coupled to ground.

Circulator 322 adds more isolation in the RF transmission path by channeling the signal coming back on RF transmission 326 into the termination port of the circulator. The signal is dumped into the load and dissipated in the termination. Thus, as shown by the clockward pointing arrow, signals which are input from RF transmission path 324 are passed through to RF transmission path 326. In the same manner, signals which are received from RF transmission path 326 are passed thorough to the termination port.

Circulators which are configured with a termination port are referred to as an isolator. Thus, circulator 322 is also referred to as an isolator. As discussed above, circulator 322 is a three-port device. However, as one skilled in the relevant art would find apparent, other types of circulators may be used. The design consideration include the desired degree of isolation and the power level differential of the signals.

As discussed above, CDPD radio 204 generates the data transmit signal onto an instantaneously available voice frequency or channel. This data transmit signal is provided to combiner network assembly 202 via CDPD data signal RF transmission path 206 and data input port 314. Once received by combiner network assembly 202, the CDPD data transmit signal travels along RF transmission path 330 to power combiner 328. Power combiner 328 combines the combined AMPS signals received on RF transmission path 326 with the CDPD data transmit signal received on RF transmission path 330. This combined voice, setup, and data signal is then output through output port 332 to voice, setup, and RF transmission path 210 to LAC 114.

In the combiner network assembly of the present invention, the voice, setup, and data channels are combined in such a manner as to maintain the same insertion loss on the AMPS signals as the LAC four-way combiner 110 it replaces. Thus, the combiner network assembly 202 is transparent to the AMPS radios. In addition, the non-intrusive packetized nature of the CDPD data transmissions, in concert with the present invention, enables many users, both data and voice, to have access to the same transmission channels without degrading the AMPS voice transmissions. The AMPS calls (voice radio transmissions) are given first priority by virtue of the sniff and hop technique employed by the CDPD radio, and the data signal transmission is preempted by the AMPS voice transmissions when necessary.

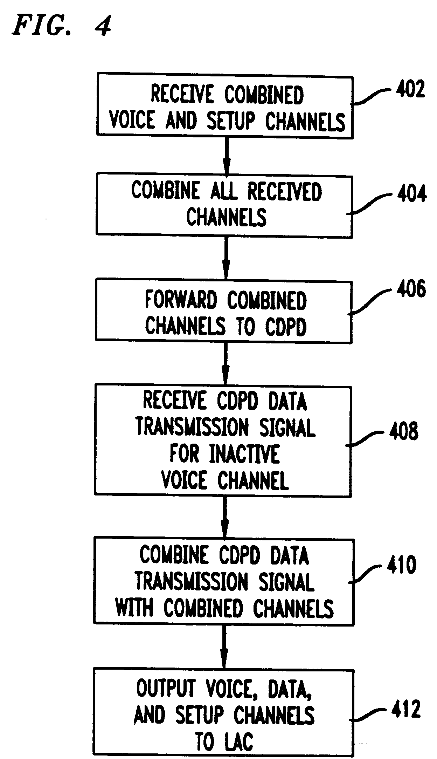

Referring to Figure 4, the operation of the combiner network assembly of the present invention is now described. In step 402, combiner network assembly 202 receives combined voice channels from combiner 104A via voice channel RF transmission path 128 at input port 310. Simultaneously, combiner network assembly 202 receives additional combined voice channels from combiners 104B and 104C via voice channel RF transmission paths 130 and 132, respectively at input ports 308 and 306, respectively. At the same time, combiner network assembly 202 receives a setup channel via setup channel RF transmission path 134 at input port 304.

At step 404, combiner network assembly 202 combines the voice channels and simulcast setup channel received from combiners 104 and power splitter 106 by utilizing a four-to-one input combiner 302. The combined AMPS signals are then output by four-to-one input combiner 302 and provided on RF transmission path 316 to an unbalanced 2-way power divider 318.

In step 406, power divider 318 directs the combined AMPS signals on RF transmission path 316 to output port 312 via RF transmission path 320. These combined signals are then provided to CDPD radio 204 via CDPD voice sampling RF transmission path 208. Power divider 318 also directs the combined AMPS signals to an unbalanced 2-way power combiner 328 through circulator 322.

In step 408, combiner network assembly 202 receives a CDPD data transmission for transmission onto an available AMPS voice channel from CDPD radio 204 via CDPD data RF transmission path 206 at input port 314. Power combiner 328 combines the voice and setup channels on RF transmission path 326 with the CDPD data transmit signal on RF transmission path 330.

In step 412, this combined voice, setup, and data signal is then output through output port 332 to voice, setup, and RF transmission path 210 to LAC 114.

In the preferred embodiment of the present invention, combiner network assembly 202 operates with CDPD radio 204. However, as one skilled in the art would find apparent, the present invention may support any cellular communications subsystem which has the capability to sample radio frequency channels and inject data signals into the radio frequency transmission path at an available voice radio frequency.

Likewise, the preferred embodiment of the present invention is designed to operate on a Series II AMPS system. However, as one skilled in the art would find apparent, the present invention may operate with other systems designed to operate according to the AMPS standard. In addition, the present invention may operate with wireless communication systems which operate according to other standards now or later developed. For example, the present invention may operate in a wireless cellular communications system which operates according to such predecessor standards as the Mobile Telephone System (MTS) or Improved Mobile Telephone System (IMTS).

While various embodiments of the present invention have been described above, it should be understood that they have been presented by way of example only, and not limitation. Thus, the breadth and scope of the present invention should not be limited by any of the above-described exemplary embodiments, but should be defined only in accordance with the following claims and their equivalents.

## Claims

1. A combiner network assembly for use in a cellular network transmission facility having a data transmission radio, comprising:
a first combiner configured to combine a plurality of combined voice signals from one or more combiners to produce a combined voice channel signal;
a second combiner configured to combine a data transmit signal from the data transmission radio with said combined voice channel signal to result in a combined voice and data signal; and
a power divider, interposed between said first combiner and said second combiner, configured to direct said combined voice channel signal to the data transmission radio and to said second combiner;
wherein the data transmission radio RF sniffs said combined voice channel signal and transmits said data transmit signal over an available voice channel.

2. The combiner network assembly of claim 1, further comprising:
an isolator interposed between said power divider and said second combiner, configured to isolate said power divider from contamination leaking through said second combiner.

3. The combiner network assembly of claim 2, wherein said power divider and said second combiner are configured to achieve a predetermined insertion loss in the combiner network assembly.

4. A cellular telephone network transmission facility, comprising:
one or more voice radios configured to transmit voice signals over selected voice channels;
one or more combiners configured to combine said voice signals transmitted by said one or more voice radios to generate a combined voice channel signal;
a data transmission system configured to process one or more voice channels to determine whether said voice channel contains a voice signal and further configured to transmit a data signal at said processed voice channel if said processed voice channel does not contain a voice signal;
a combiner network assembly, coupled to said one or more combiners and said data transmission system, configured to receive and combine said combined voice channel signals from said one or more combiners and said data signal from said data transmission system to produce a combined voice and data signal;
amplifier means, coupled to said combiner network assembly, for amplifying said combined voice and data signal; and
an antenna coupled to said amplifier means, for transmitting said combined voice and data signal.

5. The facility of claim 4, wherein said combiner network assembly comprises:
a first combiner configured to combine a plurality of said voice channel signals from said one or more combiners to produce said combined voice channel signal;
a second combiner configured to combine said data signal from said data transmission radio with said combined voice channel signal to result in said combined voice and data signal; and
a power divider, interposed between said first combiner and said second combiner, configured to direct said combined voice channel signal to said data transmission radio and to said second combiner;
wherein said data transmission radio RF sniffs said combined voice channel signal and transmits said data transmit signal over an available voice channel.

6. The transmission facility of claim 4, wherein said data transmission system is a cellular digital packet data system.

7. The transmission facility of claim 4, further comprising:
isolation means, interposed between said power divider and said second combiner, for isolating said power divider from contamination leaking through said second combiner.

8. The transmission facility of claim 4, wherein said power divider and said second combiner are configured to achieve a predetermined insertion loss in said combiner network assembly.

9. The transmission facility of claim 4, wherein said amplifier means is a broad band linear RF amplifier.

10. In a cellular telephone transmission facility having a data transmission system, the method of combining a data signal generated by the data transmission system with voice signals, comprising the steps of:
(a) receiving one or more voice channels from one or more voice radios;
(b) providing said one or more voice channels to the data transmission system;
(c) receiving a data signal from said data transmission system for transmission onto an available voice channel;
(d) combining said one or more voice channels with said available voice channel carrying said data signal; and
(e) outputting said combined one or more voice channels and said available voice channel to an RF amplifier for amplification and subsequent transmission.

11. The method of claim 10, further comprising the step of:
(f) before said step (b), combining said one or more voice channels in an internal combiner.

12. The method of claim 11, further comprising the step of:
(g) receiving a setup channel from a setup radio; and
(h) combining said setup channel with said one or more voice channels to result in a combined AMPS channels.

13. In a cellular telephone transmission facility having a data transmission system, the method of combining a data signal generated by the data transmission system with voice signals, comprising the steps of:
(a) receiving one or more combined voice channels from one or more voice radios via one or more combiners;
(b) combining said one or more voice channels from said one or more combiners in an internal combiner to result in a combined voice channel and providing said combined voice channel to a power divider;
(c) directing, by a power splitter, said combined voice channel to said data transmission system;
(d) receiving a data signal from said data transmission system for transmission onto an available voice channel;
(e) combining, by a combiner, said voice signal with said data signal; and
(f) outputting said combined voice and data signals to an RF amplifier for amplification and subsequent transmission.
